# EUROPÄISCHE PATENTANMELDUNG

(11) **EP 3 785 533 A1**
(43) Veröffentlichungstag der Anmeldung: **03.03.2021**
(21) Anmeldenummer: 20000309.3
(22) Anmeldetag: 26.08.2020
(51) Int. Cl.: A01K 27/00, B60R 22/10

(54) **SICHERHEITSGURTADAPTER**

(30) Priorität: 29.08.2019 DE 202019003582 U
(71) Anmelder: FFL GmbH, 46519 Alpen (DE)
(72) Erfinder: Kangowski, Alf, 58313 Herdecke (DE)

(57) **Zusammenfassung**

Die Erfindung betrifft einen Sicherheitsgurtadapter zur Sicherung von Haustieren, insbesondere Hunden in einem Kraftfahrzeug. Um einen Sicherheitsgurtadapter für den Transport von Tieren in Kraftfahrzeugen zur Verfügung zu stellen, der sowohl den Fahrzeuglenker vor Beeinträchtigungen seiner Aufmerksamkeit und seiner Reaktionsfähigkeit schützt, als auch im Falle eines heftigeren Bremsens oder eines Unfalls für das Tier größtmögliche Sicherheit gegen Verletzungen bietet, ist vorgesehen, dass der Sicherheitsgurtadapter mit einem einen Aufnahmeabschnitt für einen Sicherheitsgurt aufweisenden Grundkörper, einem gelenkig mit dem Grundkörper verbundenen, zwischen einer den Aufnahmeabschnitt freigebenden Öffnungsposition und einer den Aufnahmeabschnitt überdeckenden Schließstellung verstellbaren Klemmkörper mit einer Sicherheitsgurtklemmfläche, einem Verschlusskörper, der zwischen einer den Klemmkörper in der Schließstellung arretierenden Verschlussstellung und einer den Klemmkörper freigebenden Freigabestellung verstellbar mit dem Grundkörper verbunden ist, und einem zur Verbindung mit einem Gurtgeschirr oder Halsband ausgebildeten Haltegurt, ausgebildet ist.

## Beschreibung

Die Erfindung betrifft einen Sicherheitsgurtadapter zur Sicherung von Haustieren, insbesondere Hunden in einem Kraftfahrzeug.

Das Mitführen von Tieren, bspw. Hunden in Kraftfahrzeugen, insbesondere PKWs unterliegt den Regeln der Straßenverkehrs-Ordnung. Demnach ist der Fahrzeugführer dafür verantwortlich, dass er durch die Tiere weder in seiner Aufmerksamkeit noch in seiner Reaktionsfähigkeit beeinträchtigt wird. Hierzu sind die Tiere so im Fahrzeug zu sichern, dass sie die Beherrschung des Fahrzeugs durch den Fahrzeuglenker nicht in riskanter Weise beeinflussen. Dies wäre in extremster Weise z. B. dann der Fall, wenn ein kleinerer Hund oder eine Katze während der Fahrt unter das Bremspedal gerät. Versicherungen verweigern in solchen Fällen den Schadenersatz.

Dem Risiko, durch Hunde und Katzen bei der Beherrschung des Fahrzeugs beeinträchtigt zu werden, wird derzeit dadurch begegnet, dass die Tiere in im Kofferraum befindliche Boxen oder Käfige gesperrt werden. Alternativ werden die Tiere über ihre Brustgeschirre oder Halsbänder, die für das Anleinen des Tieres dienen, über zusätzliche Gurtbänder auf dem Rücksitz des Autos fixiert. Diese Gurtbänder sind hierzu mit Schlosszungen versehen, die an die in Kraftfahrzeugen verbaute Gurtschlösser angepasst sind und somit eine Arretierung der Tiere über die vorhandenen Gurtschlösser ermöglichen.

Die Verwendung der Gurtschlösser weist jedoch den Nachteil auf, dass diese aufgrund ihrer ortsfesten Positionierung im Übergangsbereich zwischen Sitzfläche und Sitzrückenlehne keine Anpassung ermöglichen, wodurch das Tier in seiner Bewegungsfreiheit stark eingeschränkt ist. Zudem ist im Falle eines heftigeren Bremsens oder eines Auffahrunfalls das Tier nicht ausreichend vor einem Aufprall geschützt, insbesondere dann, wenn die Gurtschlösser der seitlichen Sitze zur Befestigung der Tiere verwendet werden.

Hiervon ausgehend liegt der Erfindung die Aufgabe zugrunde, ein Sicherheitsgurtadapter für den Transport von Tieren in Kraftfahrzeugen zur Verfügung zu stellen, der sowohl den Fahrzeuglenker vor Beeinträchtigungen seiner Aufmerksamkeit und seiner Reaktionsfähigkeit schützt, als auch im Falle eines heftigeren Bremsens oder eines Unfalls für das Tier größtmögliche Sicherheit gegen Verletzungen bietet.

Die Erfindung löst die Aufgabe durch einen Sicherheitsgurtadapter mit den Merkmalen des Anspruchs 1. Vorteilhafte Weiterbildungen der Erfindung sind in den abhängigen Ansprüchen angegeben.

Gemäß der Erfindung weist der Sicherheitsgurtadapter zur Sicherung von Haustieren, insbesondere Hunden in einem Kraftfahrzeug,
- einen Aufnahmeabschnitt für einen Sicherheitsgurt aufweisenden Grundkörper,
- einen gelenkig mit dem Grundkörper verbundenen, zwischen einer den Aufnahmeabschnitt freigebenden Öffnungsposition und einer den Aufnahmeabschnitt überdeckenden Schließstellung verstellbaren Klemmkörper mit einer Sicherheitsgurtklemmfläche,
- einen Verschlusskörper, der zwischen einer den Klemmkörper in der Schließstellung arretierenden Verschlussstellung und einer den Klemmkörper freigebenden Freigabestellung verstellbar mit dem Grundkörper verbunden ist, und
- einen zur Verbindung mit einem Gurtgeschirr oder Halsband ausgebildeten Haltegurt auf.

Der erfindungsgemäße Sicherheitsgurtadapter erlaubt im Gegensatz zu den aus dem Stand der Technik bekannten, nur an einem Kraftfahrzeuggurtschloss anordbaren Rückhaltesystemen eine flexible Möglichkeit zur Positionierung an den vorhandenen Sicherheitsgurten. Der Sicherheitsgurtadapter weist hierzu einen Grundkörper mit einem Aufnahmeabschnitt auf, in den ein beliebiger Abschnitt des Sicherheitsgurts einlegbar ist, so dass eine optimale Anpassung an die Größe des zu sichernden Tieres vorgenommen werden kann. Bei kleinen Hunden kann der Sicherheitsgurtadapter bspw. in einem sitzflächennahen Bereich des Sicherheitsgurtes befestigt werden, wohingegen dies bei größeren Hunden in einem sitzflächenferneren Bereich erfolgen kann. Somit wird eine an die jeweilige Größe des Tieres angepasste Sicherung des Tieres erzielt, welche bei einem Unfall einen maximalen Schutz für das Tier als auch die übrigen Fahrzeuginsassen bietet.

Eine Festlegung des Sicherheitsgurtadapters in der gewünschten Position erfolgt dabei nach der Anordnung des Gurtabschnitts in dem Aufnahmeabschnitt durch eine Verlagerung des Klemmkörpers aus seiner den Aufnahmeabschnitt freigebenden Öffnungsposition in die den Aufnahmeabschnitt überdeckenden Verschlussstellung, in der der Klemmkörper mit seiner Sicherheitsgurtklemmfläche an dem Sicherheitsgurt anliegt und diesen dort an dem Grundkörper in seiner eingestellten Position fixiert. Der Klemmkörper wirkt dabei über die Sicherheitsgurtklemmfläche eine definierte Klemmkraft auf den Sicherheitsgurt aus, wodurch dieser zwischen dem Grundkörper und dem Klemmkörper derart eingeklemmt ist, dass eine Verschiebung des Sicherheitsgurtadapters entlang des Sicherheitsgurts verhindert wird.

Zur Fixierung des Klemmkörpers in dessen Verschlussstellung dient dabei der ebenfalls mit dem Grundkörper verbunden Verschlusskörper. In der Schließstellung des Verschlusskörpers befindet sich dieser derart mit dem in der Verschlussstellung angeordneten Klemmkörper in Eingriff, dass dieser in der Verschlussstellung arretiert ist. Für eine Entfernung des Sicherheitsgurtadapters oder dessen Verlagerung entlang des Sicherheitsgurtes ist es zunächst erforderlich, den Verschlusskörper aus der Schließstellung in die den Klemmkörper freigebenden Freigabestellung zu verlagern, in der der Verschlusskörper mit dem Klemmkörper außer Eingriff befindlich ist, wodurch dieser dann in Richtung auf die Freigabestellung verlagert werden kann.

Der Verschlusskörper gewährleistet somit in zuverlässiger Weise die durch den Klemmkörper bewirkte Arretierung des Sicherheitsgurtadapters in der eingestellten Position, so dass einer ungewollten Verlagerung des Sicherheitsgurtadapters oder sogar einer Trennung der Verbindung zwischen Sicherheitsgurtadapter und Sicherheitsgurt wirksam vorgebeugt wird.

Zur Befestigung des zu sichernden Tieres an dem Sicherheitsgurtadapter weist dieser ferner einen Haltegurt auf. Dieser ist einenends mit dem Sicherheitsgurtadapter, bevorzugt dem Grundkörper verbunden und ist anderenends zur Verbindung mit einem Halsband und/oder Gurtgeschirr ausgebildet, das von dem Tier getragen wird. In einer einfachen Ausgestaltung kann der Haltegurt bspw. einen Karabiner aufweisen, welcher es ermöglicht, diesen schnell und unkompliziert an einer üblicherweise zur Anordnung einer Leine vorgesehenen Öse an dem Halsband und/oder Gurtgeschirr zu befestigen, so dass auf speziell an den Sicherheitsgurtadapter angepasste Verbindungsmittel oder Gurtgeschirre verzichtet werden kann.

Die Ausgestaltung des Aufnahmeabschnitts ist grundsätzlich frei wählbar. So kann dieser bspw. durch einen ebenen Bereich des Grundkörpers gebildet werden, welcher zur Aufnahme eines Abschnitts des Sicherheitsgurts geeignet ist, was es ermöglicht den Grundkörper besonders einfach und kostengünstig herzustellen. Nach einer Weiterbildung der Erfindung ist jedoch vorgesehen, dass der Aufnahmeabschnitt seitlich im Abstand voneinander angeordnete Gurtführungsflächen aufweist.

Der Abstand der Gurtführungsflächen ist dabei an die Breite des Sicherheitsgurtes angepasst, so dass der Aufnahmeabschnitt eine im Querschnitt U-förmige Gestalt aufweist, wobei der Sicherheitsgurt in der Gebrauchslage des Sicherheitsgurtadapters mit eingelegtem Sicherheitsgurt seitlich an den Gurtführungsflächen anliegt. Diese gewährleisten somit in besonders zuverlässiger Weise eine exakte Positionierung des Sicherheitsgurtadapters an dem Sicherheitsgurt, nach dem diese dessen Verlagerung quer zur Längsrichtung des Sicherheitsgurts blockieren, in der Öffnungsposition jedoch eine einfache Verschiebung des Sicherheitsgurtadapters entlang des Sicherheitsgurts ermöglichen. Zudem können die Gurtführungsflächen über ihre Erstreckung senkrecht zum Aufnahmeabschnitt zur Begrenzung der durch den Klemmkörper auf den Sicherheitsgurt ausgeübten Klemmkraft dienen, in dem sie eine Anlagefläche für den Klemmkörper in der Verschlussstellung bilden. Einer Beschädigung des Sicherheitsgurtes durch den Klemmkörper wird somit in besonders zuverlässiger Weise vorgebeugt.

Eine Lagesicherung des Verschlusskörpers in der Schließstellung kann grundsätzlich in beliebiger Weise erfolgen. Denkbar sind hierzu bspw. geeignete Sicherungselemente oder eine Übertotpunktlagerung. Nach einer vorteilhaften Weiterbildung der Erfindung ist jedoch vorgesehen, dass der Klemmkörper in der Verschlussstellung in Richtung auf die Freigabestellung vorgespannt ist. Bei einer Ausgestaltung der Verbindung zwischen dem Klemmkörper und dem Verschlusskörper derart, dass nach einer Verlagerung des Verschlusskörpers in die Schließstellung vor dessen Verstellung in die Freigabestellung der Klemmkörper in Richtung auf die Schließstellung verlagert werden muss, verhindert die Vorspannung zuverlässig, dass ein bspw. an dem Klemmkörper eingerasteter Verschlusskörper unbeabsichtigt in die Freigabestellung verstellt wird und den Klemmkörper freigibt. Zur Entriegelung des Verschlusskörpers ist es nutzerseitig zunächst erforderlich, den Klemmkörper entgegen der Vorspannung zu verlagern. Erst hiernach kann der Verschlusskörper in Richtung auf die Freigabestellung verlagert werden.

Die Vorspannung kann dabei in beliebiger Weise erzeugt werden. So können hierzu bspw. beliebige Federelemente verwendet werden, die in geeigneter Weise an dem Sicherheitsgurtadapter angeordnet sind. Besonders vorteilhafter Weise sind der Grundkörper und der Klemmkörper jedoch derart ausgebildet und aneinander angeordnet, dass die Vorspannung aus der der Klemmkraft entgegengesetzten Rückstellkraft des Sicherheitsgurts resultiert, wenn dieser in der Schließstellung des Klemmkörpers in dem Aufnahmeabschnitt angeordnet ist. Gemäß einer alternativen Ausgestaltung ist der Klemmkörper in seiner Verschlussstellung derart gegenüber dem Grundkörper angeordnet, dass er mit seinem freien, mit dem Verschlusskörper in Eingriff befindlichen Ende elastisch verformbar in Richtung auf den Grundköper verlagerbar ist, um eine Verlagerung des Verschlusskörpers in die Freigabestellung zu ermöglichen. Die Vorspannung resultiert bei dieser Ausgestaltung somit aus der Anordnung des Verschlusskörpers in der Verschlussstellung an dem Grundkörper und der elastischen Verformbarkeit des Verschlusskörpers. Diese Ausgestaltungen ermöglichen es, auf separate Federelemente zu verzichten, so der Sicherheitsgurtadapter besonders einfach und kostengünstig hergestellt werden kann.

Die Ausgestaltung der verriegelnden Verbindung von Klemmkörper und Verschlusskörper ist grundsätzlich, auch im Falle der Arretierung in der Schließstellung durch die vorteilhafter Weise vorgesehene Vorspannung, frei wählbar. Nach einer weiteren Ausgestaltung der Erfindung ist jedoch vorgesehen, dass der Klemmkörper eine in der Schließstellung mit einem Rastvorsprung an dem Verschlusskörper in Eingriff bringbare Rastausnehmung aufweist. Die Verwendung einer Verbindung von Rastkörper und Rastausnehmung zeichnet sich durch ihre hohe Zuverlässigkeit aus. Darüber hinaus kann über den Überdeckungsgrad von Rastkörper und Rastausnehmung in der Schließstellung in besonders einfacher Weise festgelegt werden, in welchem Umfang eine Verlagerung des Klemmkörpers in Richtung auf die Klemmstellung, vorteilhafterweise entgegen einer Vorspannung, erfolgen muss, damit der Rastvorsprung und die Rastausnehmung für eine mögliche Verlagerung des Verschlusskörpers außer Eingriff gelangen. Die Rastausnehmung und der Rastvorsprung erstrecken sich dabei vorzugsweise in Längserstreckung des Sicherheitsgurtes, wodurch eine zuverlässige Arretierung erreicht wird.

Eine Fixierung des Sicherheitsgurts an dem Aufnahmeabschnitt kann grundsätzlich bereits durch einen in der Schließstellung kraftschlüssig auf den Sicherheitsgurt wirkende Sicherheitsgurtklemmfläche erreicht werden. Nach einer vorteilhaften Weiterbildung der Erfindung ist jedoch vorgesehen, dass die Sicherheitsgurtklemmfläche und/oder der Aufnahmeabschnitt eine Profilierung, insbesondere eine Rippenstruktur aufweist. Eine Profilierung, bspw. Noppen, Rillen oder bevorzugt Rippen gewährleisten eine besonders gute Fixierung des Sicherheitsgurtes in dem Aufnahmeabschnitt, nachdem diese in der Schließstellung formschlüssig auf den Sicherheitsgurt einwirken.

Eine besonders gute Fixierung des Sicherheitsgurtes in der Schließstellung des Klemmkörpers kann auch gemäß einer weiteren Ausgestaltung der Erfindung dadurch erreicht, dass die Sicherheitsgurtklemmfläche und/oder der Aufnahmeabschnitt eine Haftbeschichtung aufweist. Die Haftbeschichtung kann dabei beispielsweise durch eine aufgebrachte Beschichtung oder durch das Anbringen eines geeigneten Einlegers erzielt werden. Die Haftbeschichtung erhöht den Reibungswiderstand zwischen dem Sicherheitsgurt und der Sicherheitsgurtklemmfläche und/oder dem Aufnahmeabschnitt, wodurch auch bei geringen Klemmkräften eine zuverlässige Arretierung des Sicherheitsgurtadapters an dem Sicherheitsgurt gewährleistet wird.

Die Ausgestaltung des Haltegurts zur Verbindung mit einem Geschirr und/oder Halsband des Tieres ist grundsätzlich frei wählbar. Der Haltegurt kann beispielsweise an dem Sicherheitsgurtadapter, bevorzugt dem Grundkörper, verankert sein, wodurch eine zuverlässige Verbindung zwischen Haltegurt und Sicherheitsgurtadapter gewährleistet ist, die auch bei einem Unfall eine Sicherung des Tiers bewirkt. Nach einer vorteilhaften Ausgestaltung der Erfindung ist vorgesehen, dass der Haltegurt lösbar mit dem Grundkörper verbunden ist. Eine lösbare Anordnung des Haltegurts ermöglicht es, diesen bspw. zur Anpassung an ein vorhandenes Geschirr und/oder Halsband auszuwählen. Diese Anpassbarkeit erhöht die Einsetzbarkeit des Sicherheitsgurtadapters in ergänzender Weise. Eine Befestigung an dem Sicherheitsgurtadapter hat dabei so zu erfolgen, dass sichergestellt ist, dass die Verbindung auch im Falle eines Unfalls bestehen bleibt, damit die Sicherungsfunktion gewährleistet ist. Zur Anordnung des Haltegurts kann bspw. an dem Grundkörper eine Öffnung vorgesehen sein, durch die der Haltegurt geführt werden kann.

Ein Ausführungsbeispiel der Erfindung wird nachstehend mit Bezug auf Zeichnungen erläutert. In den Zeichnungen zeigen:
- Fig.1: eine perspektivische Ansicht eines Sicherheitsgurtadapters in einer Öffnungsposition eines Klemmkörpers und einer Freigabestellung eines Verschlusskörpers;
- Fig.2: eine perspektivische Ansicht des Sicherheitsgurtadapters von Fig. 1 in einer Schließstellung des Klemmkörpers und einer Verschlussstellung des Verschlusskörpers;
- Fig. 3: eine Draufsicht auf den Sicherheitsgurtadapter von Fig. 1 in einer Öffnungsposition des Klemmkörpers und einer Freigabestellung des Verschlusskörpers;
- Fig. 4: eine Draufsicht auf den Sicherheitsgurtadapter von Fig. 1 in einer Schließstellung des Klemmkörpers und einer Freigabestellung des Verschlusskörpers und
- Fig. 5: eine Draufsicht auf den Sicherheitsgurtadapter von Fig. 1 in einer Schließstellung des Klemmkörpers und einer Verschlussstellung des Verschlusskörpers.

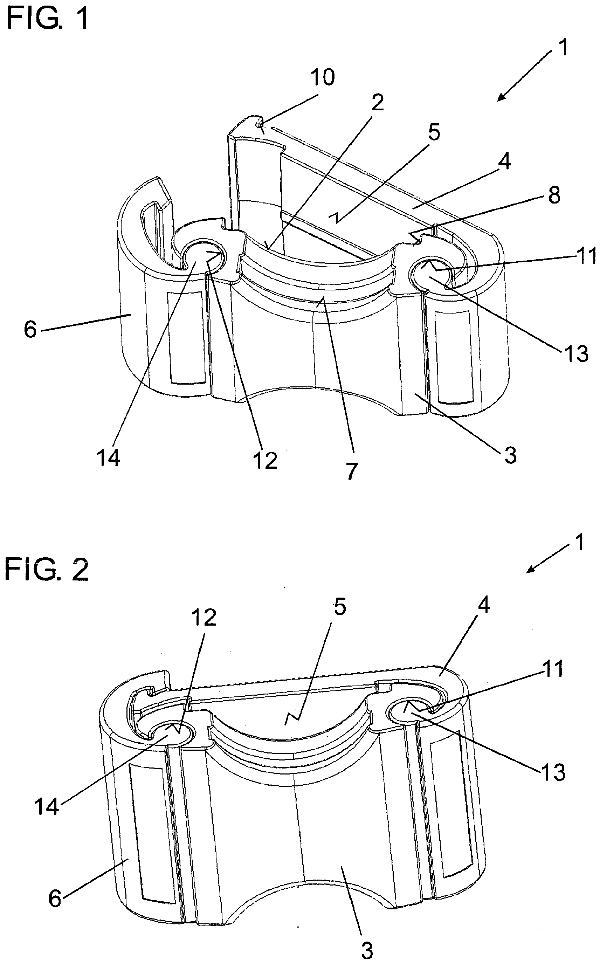

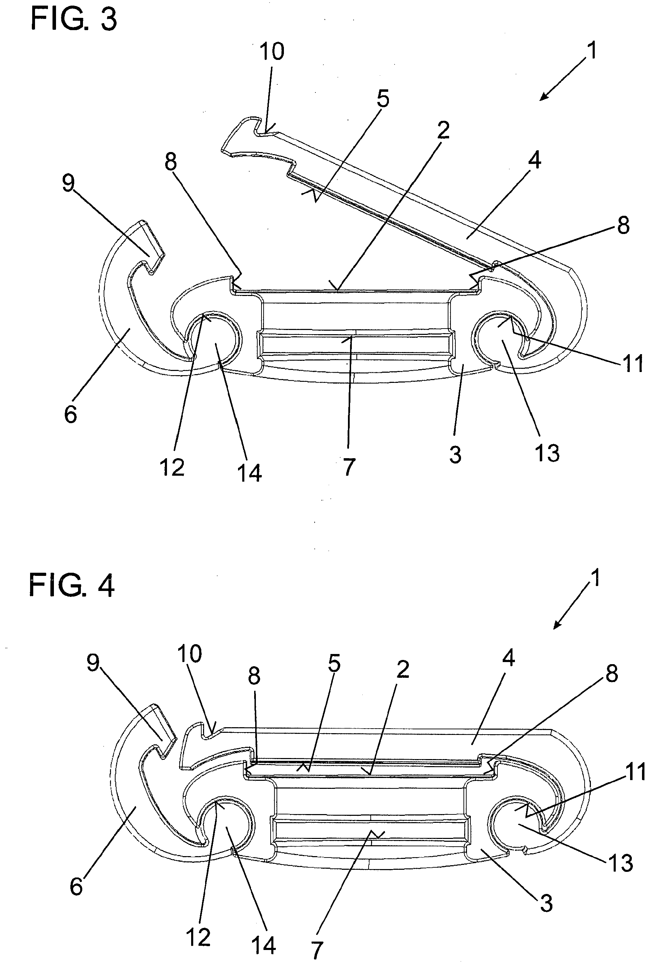

Ein in Fig. 1 und Fig. 3 in einer Position zur Aufnahme eines hier nicht dargestellten Sicherheitsgurtes eines Kraftfahrzeuges dargestellter Sicherheitsgurtadapter 1 weist einen Grundkörper 3 mit einem Aufnahmeabschnitt 2 zur Anordnung eines Abschnitts des Sicherheitsgurtes auf. Um eine seitliche Verlagerung des Sicherheitsgurtes an dem Aufnahmeabschnitt 2 zu verhindern, ist dieser durch zwei sich senkrecht zu dem Aufnahmeabschnitt 2 erstreckende Gurtführungsflächen 8 begrenzt, so dass der Aufnahmeabschnitt 2 einen U-förmigen Querschnitt aufweist.

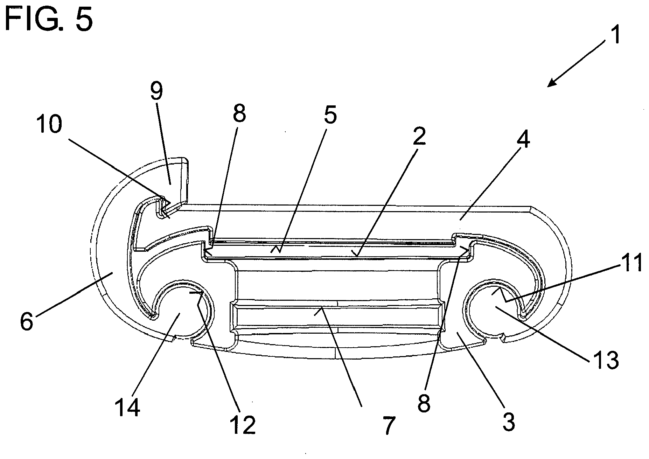

Zur Fixierung des Sicherheitsgurtadapters 1 in der eingestellten Position an dem Sicherheitsgurt dient ein Klemmkörper 3, welcher über einen im Querschnitt kreisförmigen, in einer entsprechend ausgebildeten Klemmkörperaufnahme 11 des Grundkörpers 3 angeordneten Verbindungsabschnitt 13 gelenkig mit dem Grundkörper 3 verbunden ist. Durch eine Verlagerung des Klemmkörpers 3 aus seiner in Fig. 1 und Fig. 3 dargestellten Öffnungsposition in die in Fig. 2, Fig. 4 und Fig. 5 dargestellte Schließstellung gelangt eine dem Aufnahmeabschnitt 2 zugewandte Sicherheitsgurtklemmfläche 5 in Kontakt mit einem in dem Aufnahmeabschnitt 2 angeordneten Sicherheitsgurt und bewirkt eine klemmende Arretierung des Sicherheitsgurtadapters 1 an dem Sicherheitsgurt, welcher zwischen der Sicherheitsgurtklemmfläche 5 und dem Aufnahmeabschnitt 2 eingeklemmt wird.

Zur Lagesicherung des Klemmkörpers 3 in der Schließstellung weist der Sicherheitsgurtadapter 1 einen drehgelenkig mit dem Grundkörper 3 verbundenen Verschlusskörper 6 auf, wobei dieser hierzu mit einem im Querschnitt kreisförmigen Verbindungsabschnitt 14 in einer entsprechenden Verschlussköperaufnahme 12 des Grundkörpers 3 angeordnet ist. Der Verschlusskörper 6 weist einen sich in Richtung des Sicherheitsgurtes erstreckenden Rastvorsprung 9 auf, welcher in der Verschlussstellung in eine Rastausnehmung 10 an der der Sicherheitsgurtklemmfläche 9 abgewandten Seite des Klemmkörpers 4 eingreift.

Zur Öffnung des Sicherheitsgurtadapters 1 d.h. zur Verlagerung des Klemmkörpers 4 in die Öffnungsposition ist es zunächst erforderlich, den in der in Fig. 1 und Fig. 3 in seiner Schließstellung dargestellten Klemmkörper 4 im Bereich des Verschlusskörpers 6 in Richtung auf den Aufnahmeabschnitt 2 zu verstellen. Nachdem eine weitere Verschwenkbarkeit des Klemmkörpers 4 aus der Schließstellung in Richtung auf den Aufnahmeabschnitt 2 jedoch durch dessen flächige Anlage im Bereich der Klemmkörperaufnahme 12 ausgeschlossen ist, erfolgt eine Verlagerung der Rastausnehmung 10 durch eine elastische Verformung des Klemmkörpers 4 im Bereich seines freien, dem Verbindungsabschnitt 13 gegenüberliegenden Endes in Richtung auf den Aufnahmeabschnitt 2. Durch die Verlagerung gelangt der Rastvorsprung 9 an dem Verschlusskörper 6 mit der Rastausnehmung 10 außer Eingriff, so dass dann der Verschlusskörper 6 aus seiner Verschlussstellung in die den Klemmkörper 4 freigebende Freigabestellung verstellt werden kann.

Zur Verbindung mit einem Halsband und/oder einem Geschirr eines Tieres, bspw. eines Hundes weist der Sicherheitsgurtadapter 1 eine durchgehende Haltegurtaufnahme 7 auf, durch welche ein Haltegurt hindurchgeführt und an dem Sicherheitsgurtadapter 1 fixiert werden kann.

### Bezugszeichenliste

- 1: Sicherheitsgurtadapter
- 2: Aufnahmeabschnitt
- 3: Grundkörper
- 4: Klemmkörper
- 5: Sicherheitsgurtklemmfläche
- 6: Verschlusskörper
- 7: Haltegurtaufnahme
- 8: Gurtführungsfläche
- 9: Rastvorsprung
- 10: Rastausnehmung
- 11: Klemmkörperaufnahme
- 12: Verschlusskörperaufnahme
- 13: Verbindungsabschnitt
- 14: Verbindungsabschnitt

## Patentansprüche

1. Sicherheitsgurtadapter zur Sicherung von Haustieren, insbesondere Hunden in einem Kraftfahrzeug, mit
- einem einen Aufnahmeabschnitt (2) für einen Sicherheitsgurt aufweisenden Grundkörper (3),
- einem gelenkig mit dem Grundkörper (3) verbundenen, zwischen einer den Aufnahmeabschnitt (2) freigebenden Öffnungsposition und einer den Aufnahmeabschnitt (2) überdeckenden Schließstellung verstellbaren Klemmkörper (4) mit einer Sicherheitsgurtklemmfläche (5),
- einem Verschlusskörper (6), der zwischen einer den Klemmkörper (4) in der Schließstellung arretierenden Verschlussstellung und einer den Klemmkörper (4) freigebenden Freigabestellung verstellbar mit dem Grundkörper (3) verbunden ist, und
- einem zur Verbindung mit einem Gurtgeschirr oder Halsband ausgebildeten Haltegurt.

2. Sicherheitsgurtadapter nach Anspruch 1, **dadurch gekennzeichnet, dass** der Aufnahmeabschnitt (2) seitlich im Abstand voneinander angeordnete Gurtführungsflächen (8) aufweist.

3. Sicherheitsgurtadapter nach Anspruch 1 oder 2, **dadurch gekennzeichnet, dass** der Klemmkörper (4) in der Verschlussstellung in Richtung auf die Freigabestellung vorgespannt ist.

4. Sicherheitsgurtadapter nach einem oder mehreren der vorhergehenden Ansprüche, **dadurch gekennzeichnet, dass** der Klemmkörper (4) eine in der Schließstellung mit einem Rastvorsprung (9) an dem Verschlusskörper (6) in Eingriff bringbare Rastausnehmung (10) aufweist.

5. Sicherheitsgurtadapter nach einem oder mehreren der vorhergehenden Ansprüche, **dadurch gekennzeichnet, dass** die Sicherheitsgurtklemmfläche (5) und/oder der Aufnahmeabschnitt (2) eine Profilierung, insbesondere eine Rippenstruktur aufweist.

6. Sicherheitsgurtadapter nach einem oder mehreren der vorhergehenden Ansprüche, **dadurch gekennzeichnet, dass** die Sicherheitsgurtklemmfläche (5) und/oder der Aufnahmeabschnitt (2) eine Haftbeschichtung aufweist.

7. Sicherheitsgurtadapter nach einem oder mehreren der vorhergehenden Ansprüche, **dadurch gekennzeichnet, dass** der Haltegurt lösbar mit dem Grundkörper (3) verbunden ist.
